# EUROPÄISCHE PATENTSCHRIFT

(11) **EP 2 380 433 B1**
(45) Veröffentlichungstag und Bekanntmachung des Hinweises auf die Patenterteilung: **04.06.2014**
(21) Anmeldenummer: 11001783.7
(22) Anmeldetag: 03.03.2011
(51) Int. Cl.: A01K 63/00, A01K 63/06

(54) **Abdeckung für Aquarien, Terrarien od. dgl.**
Covering for aquariums, terrariums and the like
Couvercle pour aquarium, terrarium ou analogues

(30) Priorität: 23.04.2010 DE 102010017963
(43) Veröffentlichungstag der Anmeldung: 26.10.2011
(73) Patentinhaber: Eheim GmbH & Co. KG, 73779 Deizisau (DE)
(72) Erfinder: Wißkirchen, Michael, 73095 Albershausen (DE); Persian, Ulrich, 73269 Hochdorf (DE); Mayer, Ferdinand, 72644 Oberboihingen (DE); Valder, Werner, 52385 Nideggen/Abenden (DE)
(74) Vertreter: Witte, Weller & Partner Patentanwälte mbB

(56) Entgegenhaltungen:
- EP-A2- 0 395 129
- EP-A2- 0 875 141
- GB-A- 2 266 044
- US-A- 5 404 840

## Beschreibung

Die Erfindung bezieht sich auf eine Abdeckung für Aquarien, Terrarien od. dgl., mit den Merkmalen im Oberbegriff des Anspruchs 1.

Es ist eine Abdeckung dieser Art bekannt (EP 0 610 544 A1), die einen um eine Schwenkachse schwenkbar gelagerten hochklappbaren Deckel aufweist, an dessen Unterseite eine Beleuchtungseinrichtung gehalten ist. Die Abdeckung weist eine zum Öffnen des Deckels aktivierbare, am Deckel angreifende Antriebseinrichtung auf, mittels der der Deckel selbsttätig aufklappbar ist, zumindest über einen Anfangsöffnungswinkeibereich. Die Antriebseinrichtung weist eine Bremseinrichtung auf, mittels der der Deckel im weiter aufgeklappten Zustand zumindest im wesentlichen selbsttätig offengehalten und das Deckelgewicht aufgenommen wird. Die Bremseinrichtung ist im Bereich der Schwenkachse des Deckels angeordnet und als Reibbremse oder als Verzahnungsbremse mit Verzahnungsrastung ausgebildet. Beim Öffnen des Deckels wird die unterseitig daran gehaltene Beleuchtungseinrichtung mitbewegt. Wird der Deckel hochgeklappt, fehlt dann die notwendige Beleuchtung im freigelegten Zugriffsbereich, um im Aquarium notwendige Wartungsarbeiten durchführen zu können. Außerdem wird der Benutzer bei hochgeklapptem Deckel mit Beleuchtungseinrichtung durch diese geblendet. Ein weiteres Problem ergibt sich im Zusammenhang mit zu Wartungszwecken benutzten Materialien und Werkzeugen. Diese werden bei in Öffnungsstellung befindlichem Deckel benutzt und führen zu Problemen beim Ablegen, zumal solche Materialien und/oder Werkzeuge dann auch noch naß sind.

Der Erfindung liegt die Aufgabe zugrunde, eine Abdeckung für Aquarien, Terrarien od. dgl. der eingangs genannten Art zu schaffen, die einfach und kostengünstig ist und die Voraussetzungen dafür schafft, dass beim öffnen des Deckels die mindestens eine Beleuchtungseinrichtung nicht mit dem Deckel in Öffnungsrichtung hochgeklappt wird sondern im offengelegten Zugriffsbereich des Aquariums verbleiben kann. Außerdem sollen die Voraussetzungen für eine vereinfachte und erleichterte Handhabung mit Werkzeugen z. B. bei Wartungsarbeiten geschaffen werden.

Die Aufgabe ist bei einer Abdeckung der eingangs genannten Art gemäß der Erfindung durch die Merkmale im Kennzeichnungsteil des Anspruchs 1 gelöst. Unterhalb des Deckels ist eine Platte angeordnet, die mit dem Deckel im Bereich einer Gelenkachse gelenkig verbunden ist und aufgrund der Klappbewegung des Deckels in dessen Öffnungsstellung zurück und in dessen Schließstellung gegensinnig nach vorn bewegbar ist, vorzugsweise verschiebbar ist. Auf diese Weise ist es möglich, die mindestens eine Beleuchtungseinrichtung statt am Deckel an der Unterseite der Platte anzuordnen, so dass beim Öffnen des Deckels und Zurückschieben der Platte die mindestens eine Beleuchtungseinrichtung nach wie vor im freigelegten oberen Zugriffsbereichs des Aquariums verbleibt. Für Reinigungs- und sonstige Wartungsarbeiten ist damit eine gute Ausleuchtung gewährleistet. Auch ist durch die zusätzliche Platte unterhalb des Deckels die weitere Voraussetzung dafür geschaffen, dass diese Platte eine zumindest in der Öffnungsstellung des Deckels nutzbare Ablagefläche für Utensilien od. dgl. bildet. Auf dieser Ablagefläche können also z. B. bei Wartungsarbeiten verwendete Materialien, nasse Werkzeuge od. dgl. abgelegt werden. Die Ablagefläche der Platte kann selbst in der Schließstellung des Deckels zur Ablage von Materialien, üblichem Werkzeug od. dgl. benutzt werden, die somit benutzungsbereit auf der Platte liegen. Die Platte kann im übrigen relativ großflächig bemessen werden, da sie durch Klappbewegung des Deckels in dessen Öffnungsstellung zurück verschoben wird und dann immer noch einen großen Zugriffsbereich zum Aquarium freilegt. Auch kann sich die Platte über die gesamte Breite des Deckels erstrecken mit entsprechend großflächiger Ablagefläche.

Erfindungsgemäß verläuft die Gelenkachse der Platte etwa parallel zur Schwenkachse des Deckels. Die Platte kann, quer zur Schwenkachse des Deckels gemessen, kürzer als der Deckel bemessen sein, derart, dass in der Öffnungsstellung des Deckels und bei zurückbewegter Platte ein großer vorderer Zugriffsbereich des Rahmens freigelegt ist. Die Gelenkachse der Platte kann in Abstand vom vorderen Rand der Platte vorgesehen sein, z. B. auf einem Längenbereich etwa zwischen der Mitte und dem rückwärtigen Ende der Platte. Statt dessen kann die Gelenkachse auch dem rückwärtigen Plattenende benachbart sein. Dabei befindet sich die Gelenkachse der Platte in Querabstand von der Schwenkachse des Deckels. Dieser Querabstand kann bedarfsweise verstellbar sein. Ebenfalls kann die horizontale Position der Gelenkachse der Platte verstellbar sein. Der Deckel kann beidseitig Langlöcher enthalten, in die zur Bildung der Gelenkachse beidseitige Vorsprünge der Platte eingreifen. Dadurch ist eine Höhenverstellung der Platte möglich.

In vorteilhafter Weise ist die Oberseite der Platte als zumindest in der Öffnungsstellung des Deckels nutzbare Ablagefläche für Utensilien od. dgl. ausgebildet. Vorteilhafterweise ist die Platte mit quer zur Deckelebene gemessenem Abstand unterhalb des Deckels derart angeordnet, dass die Oberseite der Platte in der Schließstellung des Deckels in Abstand von diesem verläuft. Dies hat den Vorteil, dass aufgrund dieses Abstandes auch in der Schließstellung des Deckels die Platte zur Ablage von Utensilien, Werkzeugen od. dgl. genutzt werden kann. Derartige Utensilien können somit beim Aquarium verbleiben und sind dann beim Öffnen des Deckels jederzeit verfügbar.

Von Vorteil ist es, wenn der Deckel ringsum verlaufende herabragende Seitenwände aufweist und als Haube ausgebildet ist, innerhalb der in der Schließstellung des Deckels die Platte aufgenommen ist. Vorzugsweise weist der Deckel, insbesondere dessen Seitenwände, eine randseitig umlaufende Tropfkante auf zur Vermeidung von Tropfwasser außerhalb des Aquariums beim Öffnen der Abdeckung. Die Platte kann ringsum verlaufende hochragende Seitenwände aufweisen und als Schale ausgebildet sein. Dadurch werden auf die Ablagefläche der Platte aufgelegte Utensilien, Werkzeuge od. dgl. am Herunterrutschen von der Ablagefläche gehindert.

Die mindestens eine Beleuchtungseinrichtung ist an der Unterseite der Platte angeordnet, wobei bei Vorsehen einer Beleuchtungseinrichtung diese z. B. im vorderen Bereich vorgesehen sein kann. Wenn eine zweiflutige Beleuchtung vorgesehen wird, kann hierfür eine weitere Beleuchtungseinrichtung vorgesehen sein, die z. B. im hinteren Bereich der Platte angeordnet wird.

Von Vorteil ist es, wenn zwischen dem Rahmen und der Platte, vorzugsweise im Bereich beider Längsseiten dieser, Anschlagmittel vorgesehen sind, die in der Öffnungsstellung des Deckels zur Erhaltung dieser Öffnungsstellung zusammenwirken und vorzugsweise verstellbar sind. Die Verstellbarkeit kann sowohl in vertikaler Richtung als auch quer dazu in horizontaler Richtung vorgesehen sein. Von Vorteil kann es sein, wenn die Anschlagmittel mindestens einen Vorsprung einerseits und einen zugeordneten Anschlag andererseits aufweisen, der am Vorsprung in zumindest einer Richtung anschlagen kann. Vorzugsweise schlägt der Anschlag in der Öffnungsstellung des Deckels am Vorsprung an unter Begrenzung des Schwenkwinkels des Deckels in Öffnungsrichtung. Der Vorsprung kann am Rahmen und der Anschlag an der Platte, oder umgekehrt, vorgesehen sein, wobei die Platte über den auf dem Rahmen aufsitzenden Anschlag am Rahmen in etwa vertikaler Richtung abgestützt ist. Im Bereich des jeweiligen Anschlages können Seitenflächen gebildet sein, die an zugeordneten Innenseiten des Rahmens anliegen und zur Querstabilisierung der Platte in Bezug auf den Rahmen dienen.

Von Vorteil kann es sein, wenn zwischen den Rahmen und der Platte, vorzugsweise im Bereich beider Längsseiten, eine Auflaufschräge vorgesehen ist, auf der der Anschlag der Platte bei der Bewegung des Deckels in Öffnungsrichtung oder in Schließrichtung aufläuft, wodurch die Platte angehoben bzw. abgesenkt wird. Eine solche in Öffnungsrichtung ansteigende Auflaufschräge führt dazu, dass bei Bewegen des Deckels in die Öffnungsstellung die Platte angehoben wird. Dadurch wird z. B. eine etwaige rückseitig der Platte angeordnete Beleuchtungseinrichtung mitangehoben derart, dass diese bei der Verschiebebewegung der Platte nicht am Rahmen anstößt und diese Bewegung behindert sondern statt dessen im freien Zwischenraum zwischen der Rahmenoberkante und dem Deckel aufgenommen wird.

In vorteilhafter Weise sind zwischen dem Rahmen und der Platte, vorzugsweise im Bereich beider Längsseiten dieser, Bremsmittel vorgesehen, die bei der Schwenkbewegung des Deckels zumindest in dessen Schließstellung bremsend auf diese Schwenkbewegung einwirken. Die Bremsmittel können mindestens einen Bremsvorsprung einerseits und eine Bremsoberfläche andererseits aufweisen, auf der der Bremsvorsprung bremsend bewegbar ist. Am einfachsten ist es, wenn in vorteilhafter Weise der Bremsvorsprung durch den Anschlag der Platte und die Bremsoberfläche durch eine dem Anschlag zugeordnete Längsbahn des Rahmens gebildet ist. Hierbei wirken der Anschlag einerseits und die Oberfläche des Rahmens, auf der der Anschlag abgestützt ist, andererseits zugleich als Bremsmittel. Die Längsbahn, auf der der Anschlag bremsend bewegbar ist, kann zusätzlich mit einer bremsenden Belagfläche versehen sein. Vorteilhaft kann es sein, wenn die Platte bei der Bewegung des Deckels von der Schließstellung in die Öffnungsstellung in Bezug auf eine Horizontalebene schräg gestellt wird, z. B. um einen Winkel in der Größenordnung von z. B. 25°. Dies hat den Vorteil, dass etwaiges Schwitzwasser beim Öffnen ablaufen kann.

Von Vorteil kann es sein, wenn der Deckel im vorderen Bereich z. B. beidseitig je eine mittels einer Schiebezunge schiebend verschließbare Öffnung enthält. Diese kann für die Zugabe z. B. von Futter od. dgl. durch Schieben der Schiebezunge in die Öffnungsstellung genutzt werden.

Der Rahmen und/oder der Deckel und/oder die Platte bestehen in vorteilhafter Weise aus Kunststoff.

Weitere Einzelheiten und Vorteile der Erfindung ergeben sich aus der nachfolgenden Beschreibung. Die vorstehend angegebenen Merkmale stellen jeweils für sich oder in Kombination vorteilhafte Erfindungsmerkmale und Ausgestaltungen dar, die auch Gegenstand von weiteren Unteransprüchen sein können.

Die Erfindung ist nachfolgend anhand von in den Zeichnungen gezeigten Ausführungsbeispielen näher erläutert. Es zeigen:
- Fig. 1: eine schematische und vereinfachte Seitenansicht der Oberseite eines Aquariums mit einer Abdeckung in Öffnungsstellung,
- Fig. 2: eine schematische perspektivische und vereinfachte Darstellung eines Aquariums mit oberer Abdeckung in der Öffnungsstellung,
- Fig. 3: eine perspektivische Ansicht einer Einzelheit III in Fig. 2 der Abdeckung des Aquariums in vergrößertem Maßstab,
- Fig. 4: eine schematische perspektivische Ansicht eines Aquariums mit oberer Abdeckung in der Schließstellung.

In den Zeichnungen ist eine Abdeckung 10 gezeigt, die für ein Aquarium 11, für Terrarien od. dgl. bestimmt ist und auf das oben offene Ende des Aquariums 11 aufgesetzt ist. Das Aquarium 11 hat hier z. B. Rechteckform. Es ist aus vier Wandungen 12, z. B. Glaswandungen, zusammengesetzt.

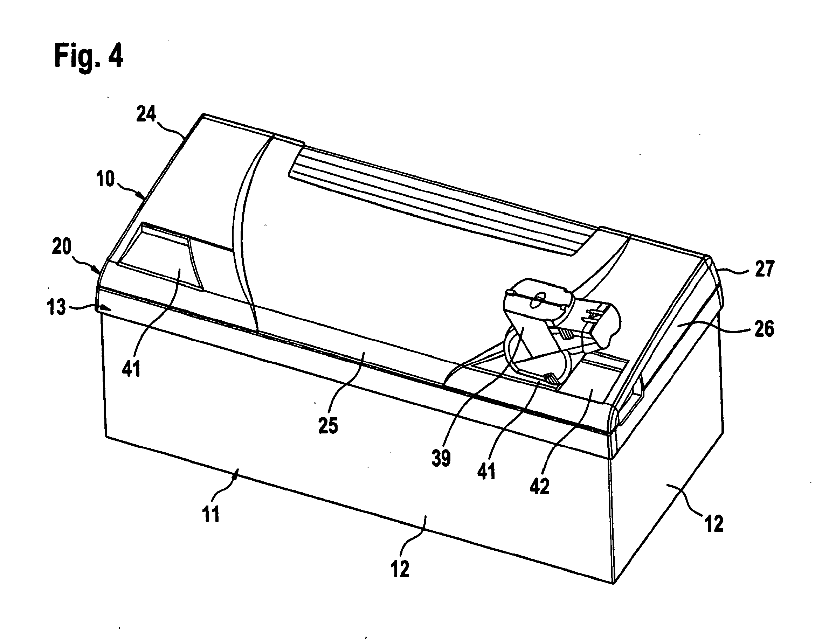

Die Abdeckung 10 weist einen etwa rechteckförmigen Rahmen 13 z. B. aus Kunststoff auf, der auf den oberen Rand des Aquariums 11 aufgesetzt ist und daran befestigt ist. Auch dieser Rahmen 13 hat etwa Rechteckform. Er umrandet den bei offener Abdeckung 10 freigegebenen Zugriffsbereich 14 zum Inneren des Aquariums 11. In der in Fig. 4 gezeigten geschlossenen Stellung der Abdeckung 10 ist durch diese der Zugriffsbereich 14 nach außen abgeschlossen. Die Abdeckung 10 schließt im wesentlichen bündig mit der Außenfläche des Rahmens 13 und der Wandung 12 ab.

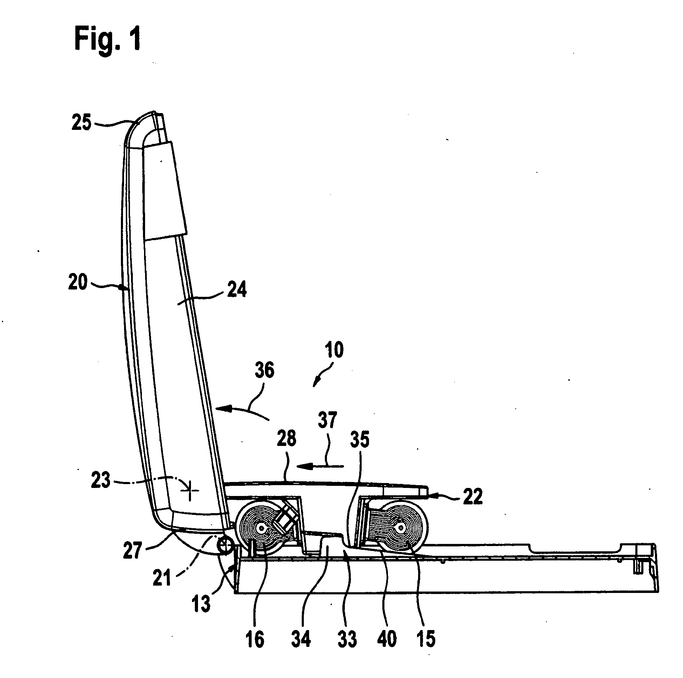

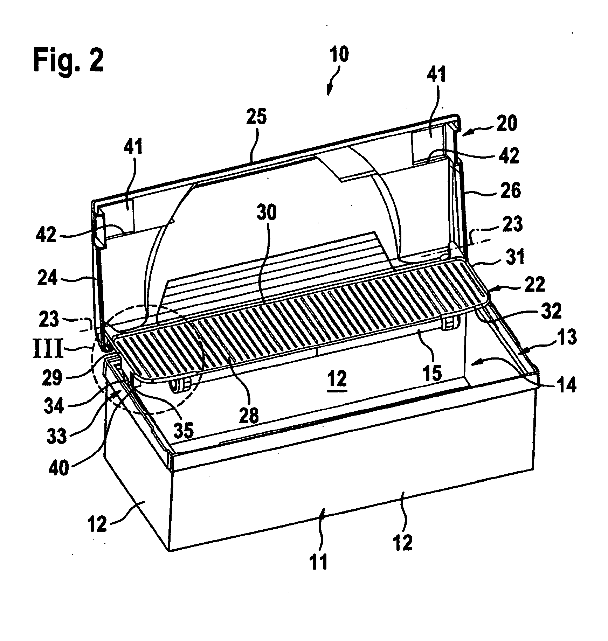

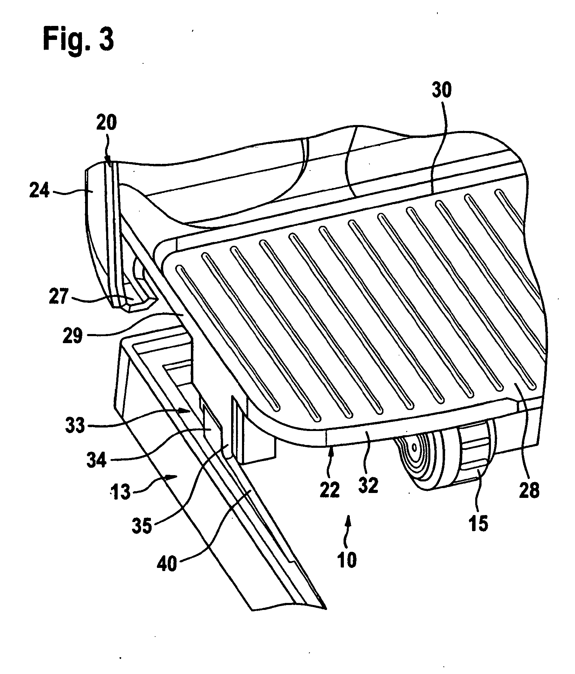

Die Abdeckung 10 weist einen klappbaren Deckel 20 auf, der am Rahmen 13 um eine horizontale Schwenkachse 21 schwenkbar gelagert ist. Die Schwenkachse 21 ist nur in Fig. 1 zu sehen und dort schematisch angedeutet. Sie ist durch rückseitige Scharniere am Rahmen 13 gebildet. Der Deckel 20 verdeckt in der in Fig. 4 gezeigten herabgeklappten Schließstellung den Zugriffsbereich 14 des Rahmens 13 und des Aquariums 11. In der hochgeklappten Öffnungsstellung gemäß Fig. 1 und 2 gibt der Deckel 20 den Zugriffsbereich 14 frei. In die Abdeckung 10 ist mindestens eine Beleuchtungseinrichtung 15 (Fig. 2 und 3) integriert, wobei in Fig. 1 gezeigt ist, dass zusätzlich zu der ersten Beleuchtungseinrichtung 15 nach Wahl eine weitere Beleuchtungseinrichtung 16 vorgesehen sein kann, die etwa parallel zur Beleuchtungseinrichtung 15 verläuft. Beide Beleuchtungseinrichtungen 15, 16 weisen eine beidseitig in Fassungen gehaltene Leuchtstoffröhre auf.

Unterhalb des Deckels 20 ist eine Platte 22 angeordnet, die mit dem Deckel 20 im Bereich einer Gelenkachse 23 gelenkig verbunden ist und die aufgrund der Klappbewegung des Deckels 20 in dessen Öffnungsstellung zurück bewegbar und in dessen Schließstellung gegensinnig nach vorn bewegbar ist.

Der Deckel 20 und auch die Platte 22 können aus Kunststoff bestehen. Der Deckel 20 ist als Haube ausgebildet, die ringsum verlaufende, herabragende Seitenwände 24 bis 27 aufweist. In der herabgeklappten Schließstellung des Deckels 20 verschwindet die Platte 22 im Haubeninneren des Deckels 20 und ist von den Seitenwänden 24 bis 27 überdeckt. Der Deckel 20, insbesondere dessen Seitenwände 24 bis 27, kann eine randseitig umlaufende Tropfkante aufweisen zur Vermeidung von Tropfwasser außerhalb des Aquariums 11 beim Öffnen der Abdeckung 10.

Die Gelenkachse 23 der Platte 22 verläuft etwa parallel zur Schwenkachse 21 des Deckels 20. Die Platte 22 wird durch Schwenkbewegung des Deckels 20 bewegt. Ersichtlich ist die Platte 22, quer zur Schwenkachse 21 des Deckels 20 gemessen, kürzer als der Deckel 20 bemessen, derart, dass in der Öffnungsstellung des Deckels 20 gemäß Fig. 1 und Fig. 2 und bei dadurch zurück bewegter Platte 22 ein großer vorderer Zugriffsbereich 14 des Rahmens 13 und Aquariums 11 freigelegt ist. Die Beleuchtungseinrichtung 15, 16 ist an der Unterseite der Platte 22 angeordnet, wobei die eine Beleuchtungseinrichtung 15 z. B. im vorderen Bereich und die weitere Beleuchtungseinrichtung 16 im hinteren Bereich der Platte 22 angebracht ist. Auf diese Weise ist erreicht, dass beim Öffnen des Deckels 20 die Beleuchtungseinrichtung 15, 16 nicht mit dem Deckel 20 hochgeklappt wird, wodurch sonst die notwendige Beleuchtung fehlen würde, um im Aquarium 11 notwendige Wartungsarbeiten durchführen zu können. Derartiges ist bei geöffnetem Deckel 20 und nach wie vor auf Höhe des Zugriffsbereichs 14 befindlicher Beleuchtungseinrichtung 15, 16 möglich mit guter Ausleuchtung des Zugriffsbereichs 14 durch die Beleuchtungseinrichtung 15, 16. Da diese nicht mit dem Deckel 20 in Öffnungsstellung hochgeschwenkt wird, ist auch eine sonst gegebene Blendung bei hochgeschwenkter Beleuchtungseinrichtung durch diese verhindert.

Man erkennt, dass die Gelenkachse 23 der Platte 22 beim gezeigten Ausführungsbeispiel am rückwärtigen Ende der Platte 22 vorgesehen ist. Bei einem anderen, nicht gezeigten Ausführungsbeispiel ist statt dessen die Gelenkachse 23 in Abstand vom vorderen Ende der Platte 22 vorgesehen, z. B. etwa auf dem Längenbereich zwischen der Mitte und dem rückwärtigen Ende der Platte 22. Die Gelenkachse 23 befindet sich in Querabstand von der Schwenkachse 21 des Deckels 20. Der Querabstand bestimmt die Höhenposition der Platte 22 über dem Rahmen 13 in der Öffnungsstellung. Bei einem nicht gezeigten Ausführungsbeispiel kann der Querabstand der Gelenkachse 23 von der Schwenkachse 21 einstellbar sein. Auch kann am Deckel 20 jeweils ein Langloch und an der Platte 22 jeweils ein Stift vorgesehen sein oder umgekehrt, der zur Lagerung und Bildung der Gelenkachse 23 in das jeweilige Langloch eingreift. Dadurch ist eine Höhenveränderung der Gelenkachse 23 möglich.

Die Oberseite der Platte 22 ist als Ablagefläche 28 ausgebildet, die zumindest in der Öffnungsstellung des Deckels 20 nutzbar ist, z. B. zum Ablegen von Utensilien, von nassen Werkzeugen, bei Wartungsarbeiten od. dgl. Auch in der Schließstellung des Deckels 20 sind auf der Ablagefläche 28 Utensilien, z. B. übliche Werkzeuge, ablegbar. Dies bedeutet, dass Werkzeuge, die für Wartungsarbeiten am Aquarium 11 immer wieder benötigt werden, auf der Ablagefläche 28 der Platte 22 verbleiben können sowohl in der Öffnungsstellung als auch in der Schließstellung des Deckels 20. Um eventuelles Schwitzwasser von der Ablagefläche 28 ablaufen zu lassen, kann die Anordnung so getroffen sein, dass die Platte 22 während des Öffnungsvorganges geneigt wird, z. B. um ca. 25°.

Sollte eine Reparatur der Beleuchtungseinrichtung 15, 16, z. B. ein Auswechseln einer Leuchtstoffröhre, notwendig werden, kann die Platte 22 bei in Öffnungsstellung befindlichem Deckel 20 auch für sich relativ zum Deckel 20 um die Gelenkachse 23 hochgeschwenkt und vorzugsweise am Deckel 20 verrastet werden, so dass die Beleuchtungseinrichtung 15, 16 gut zugänglich ist.

Ersichtlich ist die Platte 22 mit quer zur Ebene des Deckels 20 gemessenem Abstand unterhalb des Deckels 20 angeordnet, und zwar derart, dass die Oberseite der Platte 22 in der Schließstellung des Deckels 20 in Abstand von diesem verläuft. Die Platte 22 weist ringsum verlaufende hochragende Seitenwände 29 bis 32 auf, die ein Herabrutschen von auf der Ablagefläche 28 liegenden Utensilien, Werkzeugen od. dgl. verhindern. In dieser Form ist die Platte 22 als Schale gestaltet.

Zwischen dem Rahmen 13 und der Platte 22, vorzugsweise im Bereich beider Längsseiten dieser, sind vorzugsweise verstellbare Anschlagmittel 33 vorgesehen, die in der Öffnungsstellung des Deckels 20 zur Erhaltung dieser Öffnungsstellung und zur Entlastung der Schwenkachse 21 zusammenwirken. Die Anschlagmittel 33 weisen mindestens einen Vorsprung 34 z. B. am Rahmen 13 und einen Anschlag 35 z. B. an der Platte 22 auf, mit dem die Platte 22 auf dem Rahmen 13 aufsitzt und in vertikaler Richtung abgestützt ist. Der Anschlag 35 kann zur Begrenzung des Öffnungswinkels des Deckels 10 beim Schwenken in Pfeilrichtung 36 am Vorsprung 34 anschlagen. Bei dieser Schwenkbewegung des Deckels 20 wird die Platte 22 in Pfeilrichtung 37 mitgenommen und soweit bewegt, bis der Anschlag 35 am Vorsprung 34 formschlüssig anschlägt. Bei einem nicht gezeigten Ausführungsbeispiel kann der Vorsprung 34 und/oder der Anschlag 35 z. B. federnd überrastbar sein, so dass in der Öffnungsstellung des Deckels 20 der Anschlag 35 auf der anderen, rückwärtigen Seite des Vorsprunges 34 anschlägt zur Erhaltung der Öffnungsstellung. Auch können der Vorsprung 34 und/oder der Anschlag 35 z. B. in Längsrichtung verstellbar ausgebildet sein. Dadurch kann Einfluss auf den Öffnungswinkel des Deckels 20 in der Öffnungsstellung genommen werden. Zwischen dem Rahmen 13 und der Platte 22, vorzugsweise im Bereich beider Längsseiten, können noch zusätzliche Bremsmittel vorgesehen sein, die bei der Schwenkbewegung des Deckels 20 zumindest in Schließstellung, also gegensinnig zum Pfeil 36, bremsend auf diese Schwenkbewegung einwirken. Auch dadurch kann sichergestellt werden, dass der geöffnete Deckel 20 nicht ungewollt zufällt. Die Anschlagmittel 33 bewirken also, dass der Deckel 20 in geöffneter Position gehalten wird. Es versteht sich, dass der Öffnungswinkel des Deckels 20 90° und mehr betragen kann. Die Anschlagmittel 33 bewirken eine Entlastung des die Schwenkachse 21 bildenden Deckelscharniers in der Öffnungsstellung. Die Bremsmittel können aus stumpfen Belagflächen z. B. an beiden Längsseiten des Rahmens 13 gebildet sein, auf denen der Anschlag 35 in etwa vertikaler Richtung aufsitzt und bei der Bewegung zwischen Öffnungsstellung und Schließstellung entlang bewegt wird. Hierbei wirkt der Anschlag 35 der Platte 22 als Bremsvorsprung, während die zugeordnete Bremsoberfläche, die damit in Kontakt steht, durch eine Längsbahn des Rahmens 13 gebildet ist.

Zwischen dem Rahmen 13 und der Platte 22, vorzugsweise im Bereich beider Längsseiten, ist eine Auflaufschräge 40 vorgesehen. Auf dieser läuft der Anschlag 35 der Platte 22 bei der Bewegung des Deckels 20 in Öffnungsrichtung oder gegensinnig in Schließrichtung auf, wodurch der Deckel 22 angehoben bzw. abgesenkt wird. Beim gezeigten Ausführungsbeispiel steigt die Auflaufschräge 40 in Öffnungsrichtung an. Dies führt dazu, dass bei der Öffnungsbewegung der Anschlag 35 auf der Auflaufschräge 40 entlangfährt und dem Keilwinkel der Auflaufschräge 40 entsprechend in Fig. 1 nach oben angehoben wird. Dies hat den Vorteil, dass bei einer mit zwei Beleuchtungseinrichtungen 15, 16 versehenen Abdeckung 10 die hintere Beleuchtungseinrichtung 16 beim Öffnen nicht störend im Wege ist sondern im Zwischenraum zwischen der rückwärtigen Wand des Rahmens 13 und der Unterkante der Seitenwand 27 des Deckels 20 Platz findet.

Aus Fig. 4 geht hervor, dass der Deckel 20 im vorderen Bereich beidseitig je eine mittels einer Schiebezunge 41 schiebend verschließbare Öffnung 42 enthält. In diesem Bereich können Zusatzelemente platziert werden, z. B. ein in Fig. 4 dargestellter Futterautomat 39, der von oben in die Öffnung 42 Futter abgibt.

## Patentansprüche

1. Abdeckung für Aquarien, Terrarien od. dgl., mit einem etwa rechteckförmigen, einen Zugriffsbereich (14) umrandenden Rahmen (13), einem am Rahmen (13) um eine Schwenkachse (21) schwenkbar gelagerten klappbaren Deckel (20), der den Zugriffsbereich (14) des Rahmens (13) in der herabgeklappten Schließstellung verdeckt und in der hochgeklappten Öffnungsstellung freigibt, und mit mindestens einer Beleuchtungseinrichtung (15, 16),
**dadurch gekennzeichnet,**
**dass** unterhalb des Deckels (20) eine Platte (22) angeordnet ist, die mit dem Deckel (20) im Bereich einer Gelenkachse (23) gelenkig verbunden ist und aufgrund der Klappbewegung des Deckels (20) in dessen Öffnungsstellung zurück und in dessen Schließstellung gegensinnig nach vorn bewegbar ist, wobei die Gelenkachse (23) etwa parallel zur Schwenkachse (21) verläuft.

2. Abdeckung nach Anspruch 1,
**dadurch gekennzeichnet,**
**dass** die Platte (22) quer zur Schwenkachse (21) des Deckels (20) gemessen kürzer als der Deckel (20) bemessen ist, derart, dass in der Öffnungsstellung des Deckels (20) und bei zurück bewegter Platte (22) ein großer vorderer Zugriffsbereich (14) des Rahmens (13) freigelegt ist.

3. Abdeckung nach einem der Ansprüche 1 oder 2,
**dadurch gekennzeichnet,**
**dass** die Gelenkachse (23) der Platte (22) in Abstand vom vorderen Rand der Platte (22) vorgesehen ist, z. B. auf einem Längenbereich etwa zwischen der Mitte und dem rückwärtigen Ende der Platte (22), oder dem rückwärtigen Ende der Platte (22) benachbart, und vorzugsweise, dass die Gelenkachse (23) der Platte (22) in Querabstand von der Schwenkachse (21) des Deckels (20) vorgesehen ist.

4. Abdeckung nach einem der Ansprüche 1 bis 3,
**dadurch gekennzeichnet,**
**dass** die Oberseite der Platte (22) als zumindest in der Öffnungsstellung des Deckels (20) nutzbare Ablagefläche (28) für Utensilien od. dgl. ausgebildet ist.

5. Abdeckung nach einem der Ansprüche 1 bis 4,
**dadurch gekennzeichnet,**
**dass** die Platte (22) mit quer zur Deckelebene gemessenem Abstand unterhalb des Deckels (20) derart angeordnet ist, dass die Oberseite der Platte (22) in der Schließstellung des Deckels (20) in Abstand von diesem verläuft.

6. Abdeckung nach einem der Ansprüche 1 bis 5,
**dadurch gekennzeichnet,**
**dass** der Deckel (20) ringsum verlaufende herabragende Seitenwände (24 bis 27) aufweist und als Haube ausgebildet ist, innerhalb der in der Schließstellung des Deckels (20) die Platte (22) aufgenommen ist, und vorzugsweise, dass der Deckel (20), insbesondere dessen Seitenwände (24 bis 27), eine randseitig umlaufende Tropfkante aufweist bzw. aufweisen.

7. Abdeckung nach einem der Ansprüche 1 bis 6,
**dadurch gekennzeichnet,**
**dass** die Platte (22) ringsum verlaufende hochragende Seitenwände (29 bis 32) aufweist und als Schale ausgebildet ist.

8. Abdeckung nach einem der Ansprüche 1 bis 7,
**gekennzeichnet,**
**durch** mindestens eine an der Unterseite der Platte (22) und vorzugsweise im vorderen und/oder im hinterem Bereich der Platte (22) angeordnete Beleuchtungseinrichtung (15, 16).

9. Abdeckung nach einem der Ansprüche 1 bis 8,
**dadurch gekennzeichnet,**
**dass** zwischen dem Rahmen (13) und der Platte (22), vorzugsweise im Bereich beider Längsseiten dieser, Anschlagmittel (33) vorgesehen sind, die in der Öffnungsstellung des Deckels (20) zur Erhaltung dieser Öffnungsstellung zusammenwirken und vorzugsweise verstellbar sind, wobei die Anschlagmittel (33) z. B. mindestens einen Vorsprung (34) einerseits und einen zugeordneten Anschlag (35), der am Vorsprung (34) in zumindest einer Richtung anschlagen kann, andererseits aufweisen.

10. Abdeckung nach Anspruch 9,
**dadurch gekennzeichnet,**
**dass** der Vorsprung (34) am Rahmen (13) und der Anschlag (35) an der Platte (22), oder umgekehrt, vorgesehen ist und die Platte (22) über diese Anschlagmittel (33) am Rahmen (13) abgestützt ist, z. B. derart, dass der Anschlag (35) in der Öffnungsstellung des Deckels (20) am Vorsprung (34) anschlägt unter Begrenzung des Schwenkwinkels des Deckels (20) in Öffnungsrichtung.

11. Abdeckung nach einem der Ansprüche 9 bis 10,
**dadurch gekennzeichnet,**
**dass** zwischen dem Rahmen (13) und der Platte (22), vorzugsweise im Bereich beider Längsseiten, eine Auflaufschräge (40) vorgesehen ist, auf der der Anschlag (35) der Platte (22) bei der Bewegung des Deckels (20) in Öffnungsrichtung oder in Schließrichtung aufläuft, wodurch die Platte (22) angehoben bzw. abgesenkt wird, und dass die Auflaufschräge (40) vorzugsweise in Öffnungsrichtung ansteigt.

12. Abdeckung nach einem der Ansprüche 1 bis 11,
**dadurch gekennzeichnet,**
**dass** zwischen dem Rahmen (13) und der Platte (22), vorzugsweise im Bereich beider Längsseiten dieser, Bremsmittel vorgesehen sind, die bei der Schwenkbewegung des Deckels (20) zumindest in dessen Schließstellung bremsend auf diese Schwenkbewegung einwirken, und vorzugsweise, dass die Bremsmittel mindestens einen Bremsvorsprung einerseits und eine Bremsoberfläche, auf der der Bremsvorsprung bremsend bewegbar ist, andererseits aufweisen.

13. Abdeckung nach Anspruch 12,
**dadurch gekennzeichnet,**
**dass** der Bremsvorsprung durch den Anschlag (35) der Platte (22) und die Bremsoberfläche durch eine dem Anschlag (35) zugeordnete Längsbahn des Rahmens (13) gebildet ist.

14. Abdeckung nach einem der Ansprüche 1 bis 13,
**dadurch gekennzeichnet,**
**dass** die Platte (22) bei der Bewegung des Deckels (20) von der Schließstellung in die Öffnungsstellung in Bezug auf eine Horizontalebene schräg gestellt wird, z. B. um einen Winkel in der Größenordnung von z. B. 25°.

15. Abdeckung nach einem der Ansprüche 1 bis 14,
**dadurch gekennzeichnet,**
**dass** der Deckel (20) im vorderen Bereich beidseitig je eine mittels einer Schiebezunge (41) schiebend verschließbare Öffnung (42) enthält.

## Claims

1. Covering for aquaria, terraria or the like, having an approximately rectangular frame (13), which borders an access region (14), having a swing-action lid (20), which is mounted on the frame (13) such that it can be pivoted about a pivot axis (21) and which conceals the access region (14) of the frame (13) in the swung-down, closed position and releases the same in the swung-up, open position, and having at least one lighting device (15, 16),
**characterized**
**in that** the lid (20) has arranged beneath it a panel (22) which is connected in an articulated manner to the lid (20) in the region of an articulation axis (23) and, on account of the swing-action movement of the lid (20), can be moved back into the open position of the lid and forwards, in the opposite direction, into the closed position of the lid, wherein the articulation axis (23) runs approximately parallel to the pivot axis (21).

2. Covering according to Claim 1,
**characterized**
**in that** the panel (22) is of shorter dimensioning than the lid (20), as measured transversely to the pivot axis (21) of the lid (20), such that, in the open position of the lid (20) and with the panel (22) moved back, a large front access region (14) of the frame (13) is exposed.

3. Covering according to either of Claims 1 and 2,
**characterized**
**in that** the articulation axis (23) of the panel (22) is provided at a distance from the front periphery of the panel (22), e.g. over a region of its length approximately between the centre and the rear end of the panel (22), or is adjacent to the rear end of the panel (22), and preferably in that the articulation axis (23) of the panel (22) is provided at a transverse distance from the pivot axis (21) of the lid (20).

4. Covering according to one of Claims 1 to 3,
**characterized**
**in that** the upper side of the panel (22) is designed in the form of a set-down surface (28) for utensils or the like, it being possible for said set-down surface to be used at least in the open position of the lid (20).

5. Covering according to one of Claims 1 to 4,
**characterized**
**in that** the panel (22) is arranged at such a distance beneath the lid (20), as measured transversely to the lid plane, that the upper side of the panel (22) is spaced apart from the lid (20) in the closed position of the latter.

6. Covering according to one of Claims 1 to 5,
**characterized**
**in that** the lid (20) has downwardly projecting side walls (24 to 27) running all the way round and is designed in the form of an enclosure within which the panel (22) is accommodated in the closed position of the lid (20), and preferably in that the lid (20), in particular the side walls (24 to 27) thereof, has or have a drip edge running all the way round the periphery.

7. Covering according to one of Claims 1 to 6,
**characterized**
**in that** the panel (22) has upwardly projecting side walls (29 to 32) running all the way round and is designed in the form of a tray.

8. Covering according to one of Claims 1 to 7,
**characterized**
**by** at least one lighting device (15, 16), which is arranged on the underside of the panel (22) and preferably in the front and/or in the rear region of the panel (22).

9. Covering according to one of Claims 1 to 8,
**characterized**
**in that** stop means (33) are provided between the frame (13) and the panel (22), preferably in the region of the two longitudinal sides of the same, and these stop means interact, and can preferably be adjusted, in the open position of the lid (20), in order to maintain this open position, wherein the stop means (33) have, on the one hand, for example at least one protrusion (34) and, on the other hand, an associated stop (35), which can stop against the protrusion (34) in at least one direction.

10. Covering according to Claim 9,
**characterized**
**in that** the protrusion (34) is provided on the frame (13) and the stop (35) is provided on the panel (22), or vice versa, and the panel (22) is supported on the frame (13) via said stop means (33), e.g. such that the stop (35) stops against the protrusion (34) in the open position of the lid (20), thus limiting the pivoting angle of the lid (20) in the opening direction.

11. Covering according to either of Claims 9 and 10,
**characterized**
**in that** a run-on slope (40) is provided between the frame (13) and the panel (22), preferably in the region of the two longitudinal sides, and, when the lid (20) is being moved in the opening direction or in the closing direction, the stop (35) of the panel (22) runs up on said run-on slope, as a result of which the panel (22) is respectively raised or lowered, and in that the run-on slope (40) slopes up preferably in the opening direction.

12. Covering according to one of Claims 1 to 11,
**characterized**
**in that** braking means are provided between the frame (13) and the panel (22), preferably in the region of the two longitudinal sides of the same, and, when the lid (20) is pivoting at least into its closed position, said braking means act with braking action on this pivoting movement, and preferably in that the braking means have, on the one hand, at least one braking protrusion and, on the other hand, a braking surface, on which the braking protrusion can be moved with braking action.

13. Covering according to Claim 12,
**characterized**
**in that** the braking protrusion is formed by the stop (35) of the panel (22) and the braking surface is formed by a longitudinal track which forms part of the frame (13) and is assigned to the stop (35).

14. Covering according to one of Claims 1 to 13,
**characterized**
**in that**, when the lid (20) is being moved from the closed position into the open position, the panel (22) is positioned obliquely in relation to a horizontal plane, e.g. by an angle in the order of magnitude of, for example, 25°.

15. Covering according to one of Claims 1 to 14,
**characterized**
**in that** in the front region, on either side, the lid (20) contains an opening (42) which can be closed with sliding action by means of a sliding tongue (41).

## Revendications

1. Recouvrement pour aquariums, terrariums ou analogues, comprenant un cadre (13) approximativement rectangulaire bordant une région d'accès (14), un couvercle (20) rabattable monté sur le cadre (13) de manière à pouvoir pivoter autour d'un axe de pivotement (21), lequel couvercle recouvre la région d'accès (14) du cadre (13) dans la position de fermeture rabattue vers le bas et la dégage dans la position d'ouverture rabattue vers le haut, et comprenant au moins un dispositif d'éclairage (15, 16),
**caractérisé**
**en ce qu'**une plaque (22) est disposée en dessous du couvercle (20), laquelle est reliée de manière articulée au couvercle (20) dans la région d'un axe d'articulation (23) et, en raison du déplacement de rabattement du couvercle (20) dans sa position d'ouverture, peut être déplacée vers l'arrière et, en raison du déplacement de rabattement du couvercle dans sa position de fermeture, peut être déplacée en sens inverse vers l'avant, l'axe d'articulation (23) s'étendant approximativement parallèlement à l'axe de pivotement (21).

2. Recouvrement selon la revendication 1,
**caractérisé**
**en ce que**, mesurée transversalement à l'axe de pivotement (21) du couvercle (20), la plaque (22) est dimensionnée de manière à être plus courte que le couvercle (20), de telle sorte que dans la position d'ouverture du couvercle (20) et lorsque la plaque (22) est déplacée vers l'arrière, une grande région d'accès avant (14) du cadre (13) soit dégagée.

3. Recouvrement selon l'une quelconque des revendications 1 et 2,
**caractérisé**
**en ce que** l'axe d'articulation (23) de la plaque (22) est prévu à une certaine distance du bord avant de la plaque (22), par exemple dans une région longitudinale approximativement entre le centre et l'extrémité arrière de la plaque (22), ou de manière adjacente à l'extrémité arrière de la plaque (22), et de préférence en ce que l'axe d'articulation (23) de la plaque (22) est prévu à une certaine distance transversale de l'axe de pivotement (21) du couvercle (20).

4. Recouvrement selon l'une quelconque des revendications 1 à 3,
**caractérisé**
**en ce que** le côté supérieur de la plaque (22) est réalisé sous forme de surface de réception (28) pour des ustensiles ou analogues, laquelle peut être utilisée au moins dans la position d'ouverture du couvercle (20).

5. Recouvrement selon l'une quelconque des revendications 1 à 4,
**caractérisé**
**en ce que** la plaque (22) est disposée en dessous du couvercle (20) à une certaine distance mesurée transversalement au plan du couvercle, de telle sorte que le côté supérieur de la plaque (22) s'étende à une certaine distance du couvercle (20) dans la position de fermeture de celui-ci.

6. Recouvrement selon l'une quelconque des revendications 1 à 5,
**caractérisé**
**en ce que** le couvercle (20) comprend des parois latérales (24 à 27) faisant saillie vers le bas et s'étendant sur toute sa circonférence et est réalisé sous forme de capot à l'intérieur duquel est reçue la plaque (22) dans la position de fermeture du couvercle (20), et en ce que, de préférence, le couvercle (20), en particulier ses parois latérales (24 à 27), a ou ont un bord d'égouttage s'étendant sur toute la périphérie.

7. Recouvrement selon l'une quelconque des revendications 1 à 6,
**caractérisé**
**en ce que** la plaque (22) comprend des parois latérales (29 à 32) faisant saillie vers le haut et s'étendant sur toute sa circonférence, et est réalisée sous forme de bac.

8. Recouvrement selon l'une quelconque des revendications 1 à 7,
**caractérisé**
**par** au moins un dispositif d'éclairage (15, 16) disposé sur le côté inférieur de la plaque (22) et de préférence dans la région avant et/ou dans la région arrière de la plaque (22).

9. Recouvrement selon l'une quelconque des revendications 1 à 8,
**caractérisé**
**en ce que** des moyens de butée (33) sont prévus entre le cadre (13) et la plaque (22), de préférence dans la région des deux côtés longitudinaux de celle-ci, lesquels moyens de butée, dans la position d'ouverture du couvercle (20), coopèrent et peuvent de préférence être déplacés pour maintenir cette position d'ouverture, les moyens de butée (33) comprenant, d'une part, par exemple au moins une saillie (34) et, d'autre part, une butée associée (35) qui peut venir en butée contre la saillie (34) dans au moins une direction.

10. Recouvrement selon la revendication 9,
**caractérisé**
**en ce que** la saillie (34) est prévue sur le cadre (13) et la butée (35) est prévue sur la plaque (22), ou inversement, et la plaque (22) est supportée sur le cadre (13) par le biais de ces moyens de butée (33), de telle sorte que par exemple, dans la position d'ouverture du couvercle (20), la butée (35) vienne en butée contre la saillie (34) en limitant l'angle de pivotement du couvercle (20) dans le sens d'ouverture.

11. Recouvrement selon l'une quelconque des revendications 9 et 10,
**caractérisé**
**en ce qu'**un plan incliné (40) est prévu entre le cadre (13) et la plaque (22), de préférence dans la région des deux côtés longitudinaux, sur lequel plan incliné monte la butée (35) de la plaque (22) lors du déplacement du couvercle (20) dans le sens d'ouverture ou dans le sens de fermeture, de telle sorte que la plaque (22) soit soulevée ou abaissée, et en ce que le plan incliné (40) est ascendant de préférence dans le sens d'ouverture.

12. Recouvrement selon l'une quelconque des revendications 1 à 11,
**caractérisé**
**en ce que** des moyens de freinage sont prévus entre le cadre (13) et la plaque (22), de préférence dans la région des deux côtés longitudinaux de celle-ci, lesquels moyens de freinage, lors du déplacement de pivotement du couvercle (20) au moins dans sa position de fermeture, agissent sur ce déplacement de pivotement de manière à le freiner, et de préférence en ce que les moyens de freinage comprennent, d'une part, au moins une saillie de freinage et, d'autre part, une surface de freinage sur laquelle la saillie de freinage peut être déplacée avec effet de freinage.

13. Recouvrement selon la revendication 12,
**caractérisé**
**en ce que** la saillie de freinage est formée par la butée (35) de la plaque (22) et la surface de freinage est formée par une voie longitudinale du cadre (13) qui est associée à la butée (35).

14. Recouvrement selon l'une quelconque des revendications 1 à 13,
**caractérisé**
**en ce que**, lors du déplacement du couvercle (20) à partir de la position de fermeture jusqu'à la position d'ouverture, la plaque (22) est inclinée par rapport à un plan horizontal, par exemple d'un angle d'un ordre de grandeur de par exemple 25°.

15. Recouvrement selon l'une quelconque des revendications 1 à 14,
**caractérisé**
**en ce que** le couvercle (20) contient, dans la région avant, des deux côtés, une ouverture (42) respective pouvant être fermée par coulissement au moyen d'une languette coulissante (41).
